# EUROPEAN PATENT SPECIFICATION

(11) **EP 4 588 412 B1**
(45) Date of publication and mention of the grant of the patent: **27.05.2026**
(21) Application number: 24212309.9
(22) Date of filing: 12.11.2024
(51) Int. Cl.: A47J 47/10, B65D 47/24, B65D 81/20

(54) **LID WITH VALVE FOR VACUUM CONTAINERS**
DECKEL MIT VENTIL FÜR VAKUUMBEHÄLTER
COUVERCLE AVEC VALVE POUR RÉCIPIENTS SOUS VIDE

(30) Priority: 29.11.2023 IT 202300025404
(43) Date of publication of application: 23.07.2025
(73) Proprietor: Maina, Germano, 20069 Vaprio D'Adda (Milano) (IT)
(72) Inventor: Maina, Germano, 20069 Vaprio D'Adda (Milano) (IT)
(74) Representative: Petruzziello, Aldo

(56) References cited:
- IT-A1- BS20 110 087
- IT-U1- MI 950 073
- US-A1- 2021 300 661

## Description

The present invention relates to a lid for the closure of vacuum containers, in particular for food storage, provided with a valve for connection to suction apparatus for creating a vacuum inside the container.

### Background of the invention

Containers of the type to which reference is made in the present invention are known, sealed by a valve lid for connection to a suction device for creating a vacuum inside the container, which is normally constituted by a tray or by a jar.

The valve for enabling a vacuum to be created in the container may consist of a diaphragm that opens and closes a hole formed in the same, on the basis of the pressure differences between the interior and exterior of the container that occur during and after suction.

Such a valve is not suitable for storing food for long periods.

More sophisticated valves have been proposed, which allow higher degrees of vacuum to be obtained.

Such a valve is described, for example, in the Italian utility model no. 236641 by the same inventor and provides a plug integral with a pin mounted slidingly on a support body inserted in a seat, formed in the lid, provided with an opening on the bottom.

The pin with the plug may move from a raised position of opening of the hole, to a lowered position of closure of the same.

Between these limit positions an intermediate position of opening or closure is provided, in which suction may occur.

The support body of the pin is provided peripherally with a helical groove, or rather with two opposed helical grooves, which engage respective notches provided on a control knob, the rotation whereof causes an axial translation of the body, which is prevented from rotating, and thus of the pin, which may be brought into one of the aforementioned positions.

A fixing ring nut is then provided on the control knob.

Such a solution, although effective, is rather complex, being composed of numerous components, themselves of complex shape, which impacts production costs and assembly times.

In addition, the presence of several pieces assembled one to the other requires the use of several seals, in particular one between the control knob and the support body and one between the knob and the seat formed in the lid.

The presence of such gaskets increases the likelihood of leakages, which compromises the vacuum seal, and thus food preservation. ITMI950073U1 discloses valve lid.

### Summary of the invention

It is an object of the invention to eliminate the disadvantages of the prior art described above.

In particular, an object of the present invention is to provide a lid for the closure of vacuum food containers, provided with a valve composed of an extremely limited number of components, simple to make and easy to assemble.

Another object of the invention is to provide such a lid with valve which eliminates the need for a plurality of gaskets, and thus ensures the vacuum seal over time.

A further object of the invention is to provide such a lid with valve that is highly reliable and can be produced at competitive costs.

These and other objects are achieved by the lid with valve according to the invention, which has the features listed in the appended independent claim 1.

Advantageous embodiments of the invention are disclosed by the dependent claims.

The present invention refers to a valve lid for vacuum containers, provided with a seat having an opening towards the inside of the container in which a valve body, axially slidingly supporting a pin capable of occluding or releasing said opening, is housed, said valve body being operable by a control knob to be moved from a raised opening position in which said pin frees said opening allowing the free passage of air, to an intermediate suction position for the creation of vacuum in the container, and to a lowered closed position in which said pin occludes the opening preventing the passage of air, wherein said valve body is integral with the knob, from which it can be operated in rotation, and a threaded coupling is provided between said valve body and the seat obtained in the lid.

### Brief description of the drawings

Further features of the invention will be made clearer by the following detailed description, referring to one of the embodiments thereof purely by way of nonlimiting example and illustrated in the accompanying drawings, in which:
Fig. 1 is an axonometric view of a container, the lid whereof is provided with a valve according to the invention;
Fig. 2 is a blown-up view of the container of Fig. 1;
Fig. 3 is a blown-up median section view of the lid with valve according to the invention;
Fig. 4 is an overall view, in median section, of the valve according to the invention;

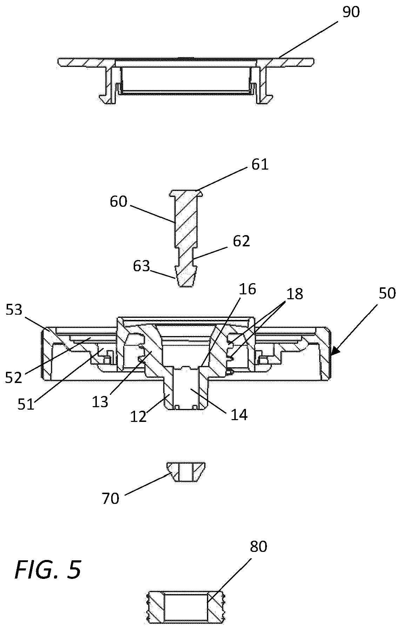

Fig. 5 is a blown-up section view of the valve of Fig. 4;
Fig. 6 is a median section view of the container taken along plane VI-VI of Fig. 1;
Figs. 6a, 6b, 6c are enlargements of the part enclosed in the rectangle denoted by A in Fig. 6, with the valve in the closed, suction (vacuum) and open position, respectively;
Fig. 7 is an enlarged view of an internal part of the lid that comprises the seat of the valve;
Fig. 8 is an enlarged view of a cap for covering the valve seat placed inside the lid, viewed from the side turned towards the same;
Fig. 9 is an enlarged section view of the valve according to the invention taken along a plane parallel to the median plane;
Fig. 10 is an axonometric view of the valve taken from the inner side;
Fig. 11 is a plan view from above of the control knob without the pin with plug;
Fig. 12 is a view of the covering and fixing ring nut of the knob shown from the inner side, in overturned position;
Fig. 13 is a partial plan view from above of the lid, showing the valve seat enlarged.

### Detailed description of the invention

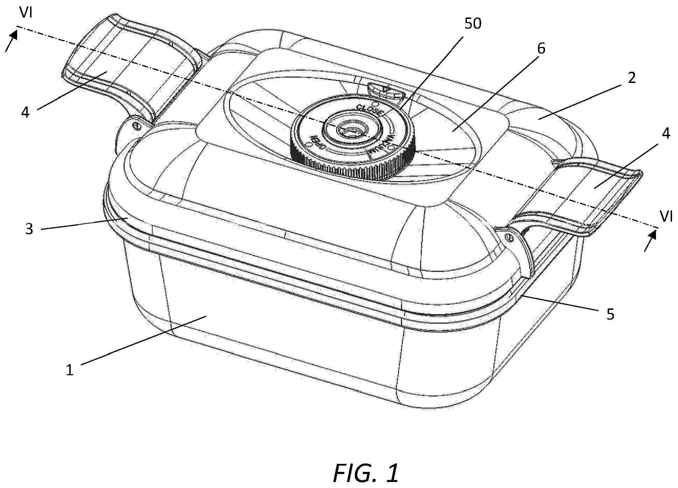

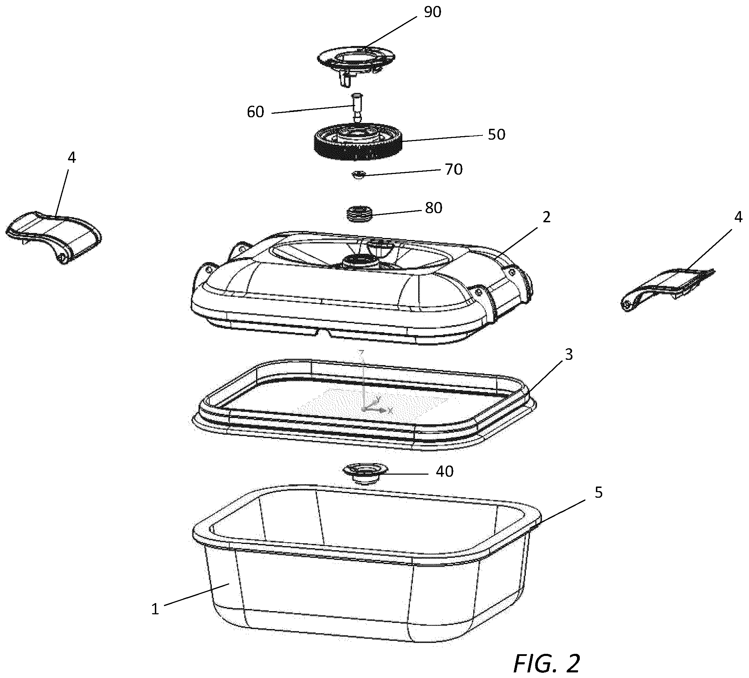

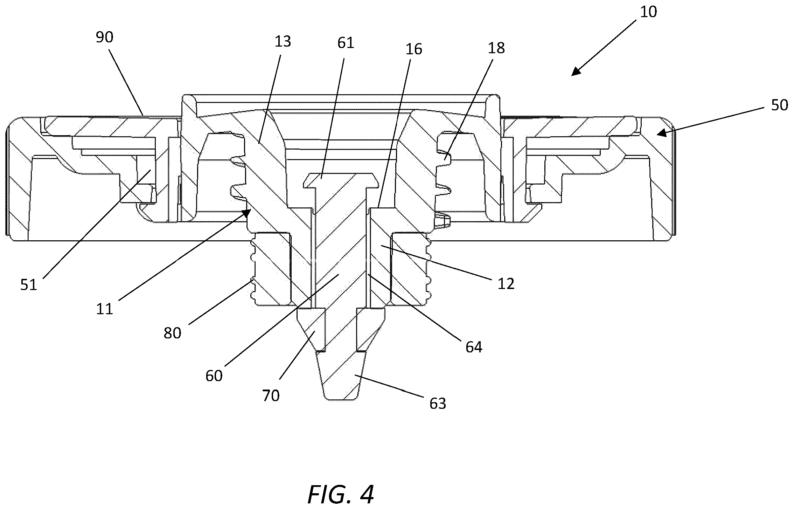

Figures 1 and 2 show a container for the vacuum storage of food, denoted by reference numeral 1, closed by a lid 2, with a sealing gasket 3 interposed, in which a valve assembly 10 according to the invention is mounted, shown assembled in the section of Fig. 4.

In the drawings, a container, with relative lid, of rectangular shape is shown, but it is clear that it can be of any other shape, such as circular, polygonal, etc., without this influencing the features of the invention.

In the particular embodiment shown, the container is closed by means of a pair of handles 4, hinged to the lid 2, which go to hook below a perimeter edge 5 of the container 1, but it is clear that any other type of closure is possible.

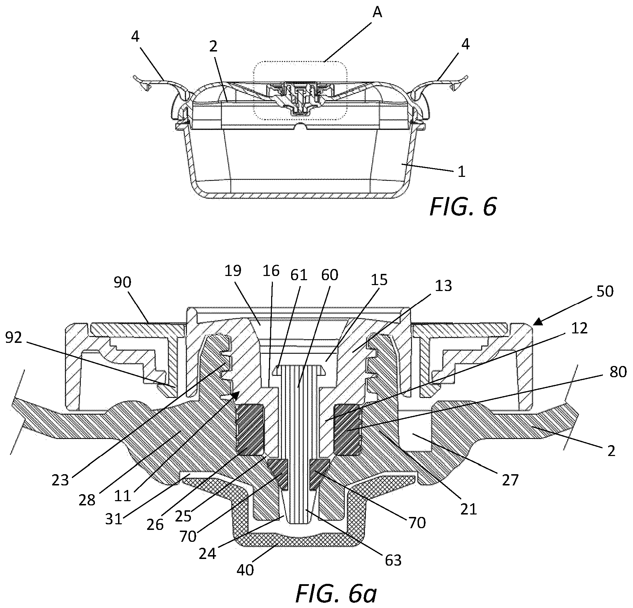

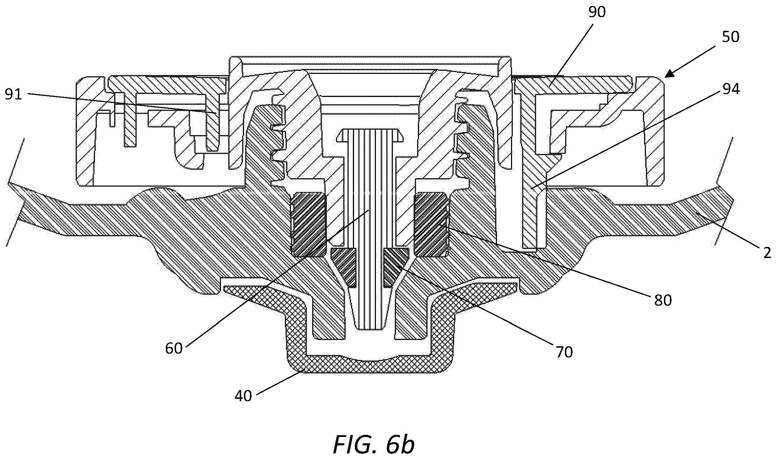

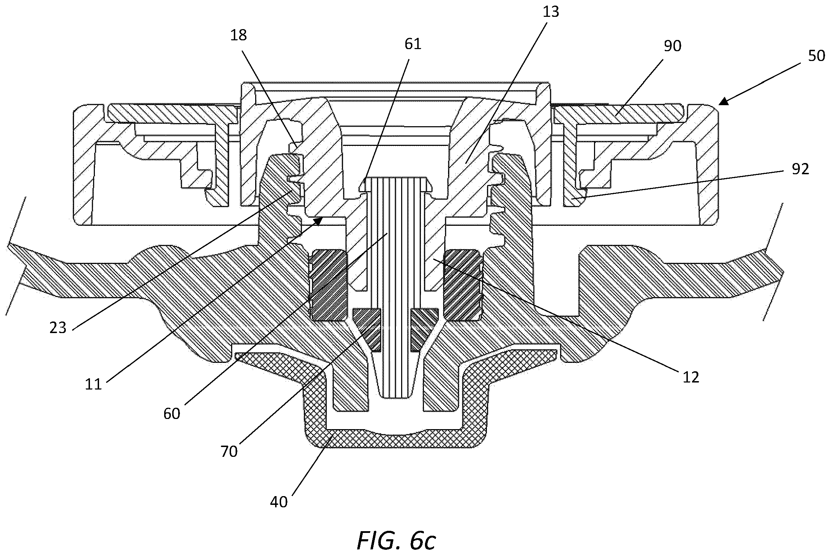

The lid 2 has a central recess 6 capable of accommodating almost entirely the valve assembly 10, in such a way that it substantially does not protrude from the upper profile of the lid, as the section of Fig. 6 shows.

Naturally, the upper wall of the lid could be perfectly flat, without this affecting the functioning of the valve, which in this case would remain protruding from the upper profile of the lid.

The lid 2 is shaped, in the central part, so as to form a seat 20 suitable for accommodating the body **11** of the valve 10, which is to be described here below.

In particular, the seat 20 is defined by two hollow, coaxial cylindrical sections: an upper one 21, protruding above from the lid 2, and a lower one 22 of smaller diameter, protruding inside the lid.

The lower cylindrical section 22 has an opening 24 on the bottom and is connected to the upper cylindrical section by means of a conical section 25, acting as the actual valve seat, and a horizontal shoulder 26.

The upper cylindrical section 21 has an internal thread 23 involving its upper part, which serves for the height adjustment of the valve body, as will be discussed below.

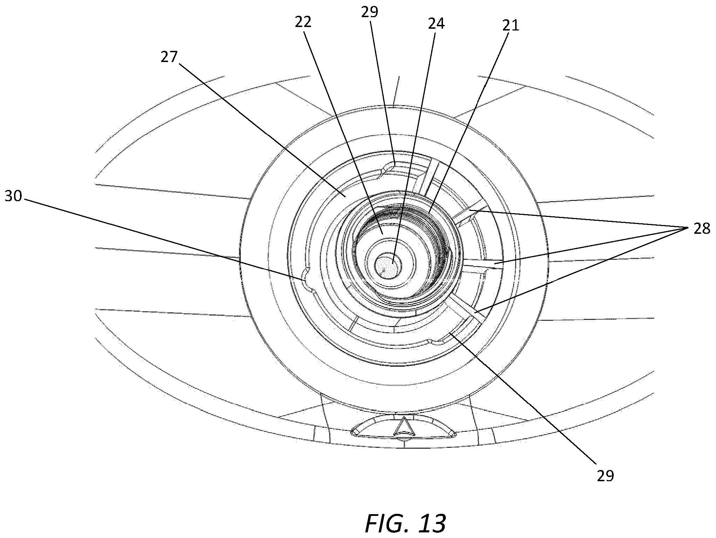

Around the upper cylindrical section 21 there is an annular groove 27, seen more clearly in the plan view of Fig. 13, in which there are a series of radial ribs 28, covering an angle slightly greater than 90°, serving the purposes to be mentioned here below.

Adjacent to the two end ribs 28, on the outer wall of the groove 27, respective recesses of elongated shape 29 are provided, and a further smaller recess 30 of substantially semicircular shape, is provided in opposition to the ribs 28.

To complete the description of the shaped central part of the lid 2, a second groove 31 is provided in its inner part around the lower cylindrical section 22.

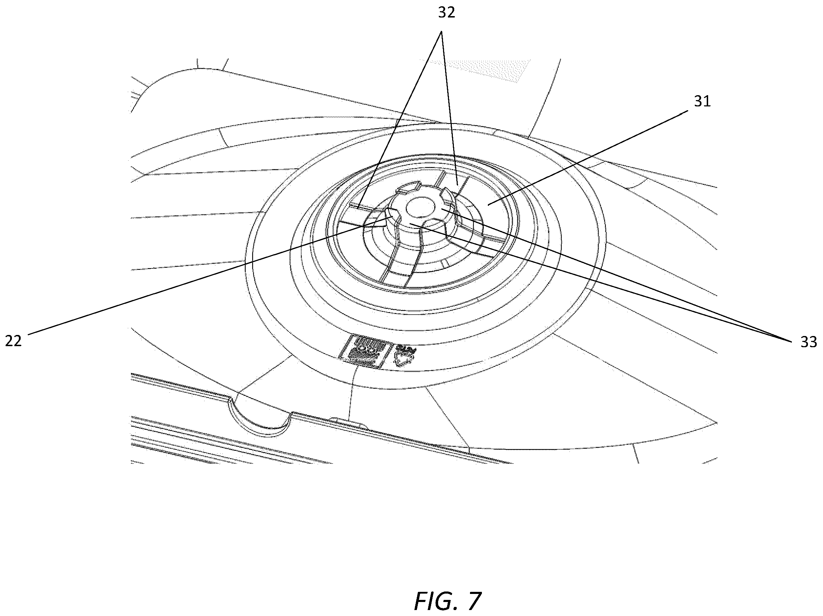

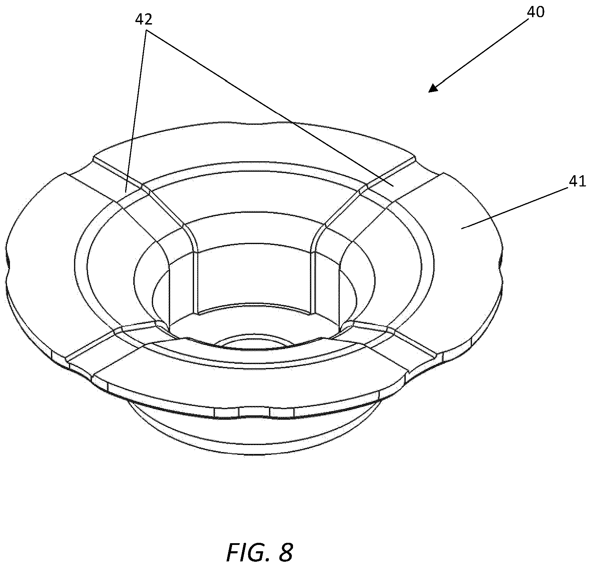

As can be seen in Fig. 7, notches or radial incisions 32 are provided in the groove 31, which extend up to notches or incisions 33 provided on the bottom of the cylindrical section 22, to which, in use, an inverted hat-shaped covering cap 40 is applied, on whose brim 41, which is placed in the aforementioned groove 31, notches or radial incisions 42 are provided, which extend up to the bottom of the cap (Fig. 8).

The purpose of the cap 40 is to prevent the passage of fine particles that may be contained in the container 1 during aspiration of air for creating the vacuum.

The notches 42 provided inside the cap 40 and the notches 32, 33 provided inside the lid 2 are instead intended to prevent adhesion between cap and lid during suction, and therefore to allow the passage of air, both exiting and entering the container.

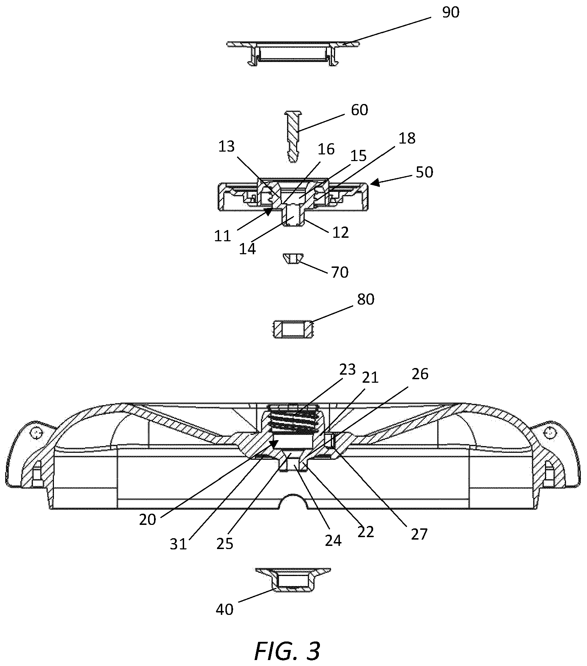

As shown in the blown-up section of Fig. 3, the valve assembly according to the invention comprises: a control knob 50, with which the aforesaid valve body **11** is integrated; a pin 60, mounted axially in the body **11** of the knob 50; a rubber grommet 70 mounted on the pin 60 to open and close the valve; a sealing gasket 80; a fixing ring nut 90.

The valve body **11** which, as mentioned, is integrated in the knob 50, is made up of a substantially hollow cylindrical member which is housed in the upper cylindrical section 21 of the seat 20 formed in the lid 2.

The body **11** has a lower cylindrical section 12 of smaller diameter, with an axial cavity 14 intended to house the pin 60, which widens above into a coaxial cavity 15 of an upper cylindrical section 13 of larger diameter.

The two cavities are connected one to the other by a flat shoulder 16.

The upper cylindrical section of the body **11** has an external thread 18 capable of engaging with the internal thread 23 of the seat 20 formed in the lid 2, in such a way as to allow a certain degree of height adjustment of the body **11** with respect to the lid 2, as will be seen here below.

Between the lower cylindrical section of the body **11** and the abovementioned seat 20 the sealing gasket 80 is placed, of toric shape, which prevents the passage of air between these elements.

The pin 60, which is housed in the axial cavity 14 of the lower cylindrical section 12 of the body 11, has an enlarged head 61, which rests on the flat shoulder 16 and an annular groove 62 in proximity of a truncated conical point 63.

In the groove 62 the conical-shaped grommet 70 is placed, which always remains below the lower cylindrical section 12 of the body 11 during the functioning of the valve and, according to the degree of screwing of the body 11 in the seat 20 of the lid, abuts or otherwise with the conical section 25 of the valve seat, occluding or releasing the opening 24 for the passage of air.

The creation of the vacuum in the container 1 takes place by means of a suction apparatus, which is not an object of the present invention, whose suction nozzle is positioned at the mouth 19 of the hollow cylindrical body 11.

The passage of air to the exterior and to the interior of the container takes place through the gap 64 between the pin 60 and the cavity 14 of the body 11, in which it is housed.

For this purpose, in order to allow the passage of air, notches or incisions 65 are provided on the bottom of the lower cylindrical section 12 of the body 11 to prevent the adhesion of the rubber grommet 70 to the body 11 during the suction phase, and corresponding notches or incisions 66 are provided on the flat shoulder 16, which constitutes the bottom of the upper cavity 15 of the body 11, to prevent the head 61 of the pin 60 from adhering to the shoulder 16 during the vacuum elimination phase, preventing the entry of air.

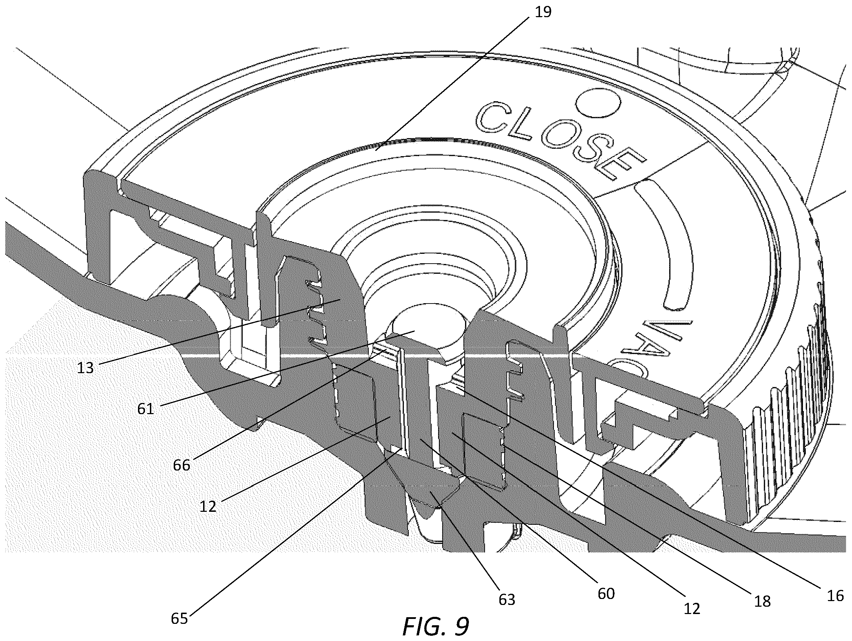

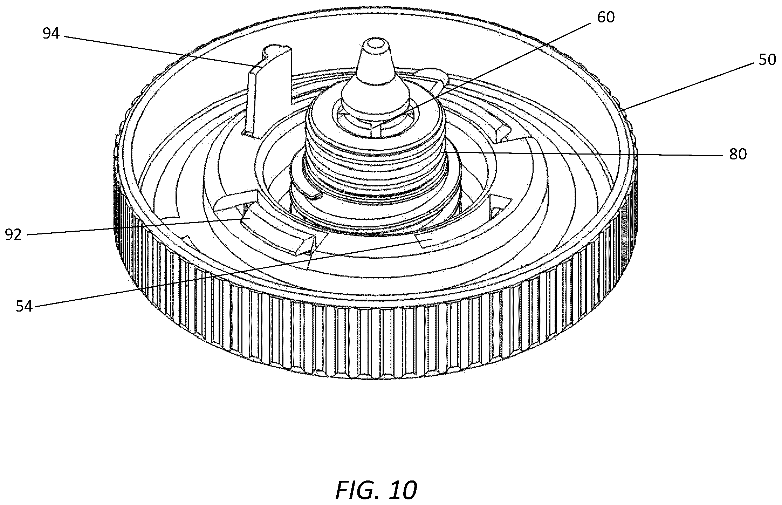

The aforementioned notches or incisions can be seen in the enlargements of Figures 9, 10, 11.

Since the hollow cylindrical body 11 of the valve is formed integrally with the control knob 50, a rotation of the knob in one direction or the other produces the opening, closing, or positioning of the valve for the creation of vacuum, as will be discussed here below.

For the fixing of the knob 50 on the lid 2, with the possibility of a limited angle of rotation for placing the valve body **11** in the different positions, operational and non-operational, a ring nut 90 is provided, which co-operates with means provided on the knob and on the lid.

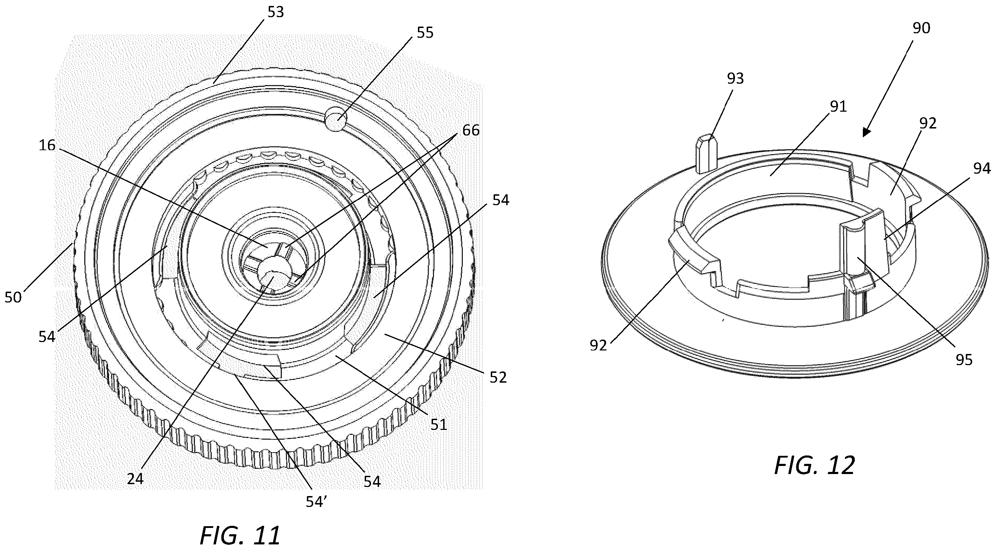

For this purpose, the knob 50 provides an annular groove 51 around the hollow cylindrical body **1,** surrounded, in turn, by a second, shallower groove 52 surrounded by a peripheral edge 53 (see also Fig. 11).

When the knob 50 is mounted on the lid 2, the deeper groove 51 is placed in perfect superimposition to the annular groove 27 provided in the lid 2.

On the bottom of the groove 51, a plurality of arched slots 54 are provided, four in number in the embodiment shown in the drawings, in reciprocal opposition, on one of which an outer recess 54' is also provided.

In a position diametrically opposed to this slot with recess 54', on the shallowest external groove 52, in proximity of the peripheral edge 53, a hole 55 is provided, serving the purposes which will be stated here below.

The fixing ring nut 90, shown in greater detail in Fig. 12, has the shape of a flat ring, which is placed in the shallowest groove 52 of the knob 50, and has peripherally to its central hole a short shell 91, in which a pair of opposing teeth 92 are provided, suitable for engaging in corresponding opposing slots 54 provided in the knob 50 to axially lock the ring nut 90.

Substantially at 90° with respect to the abovementioned opposing teeth 92, in proximity to the edge of the ring nut 90, a peg 93 is provided, protruding downwards, designed to engage in said hole 55 provided in the knob 50 for locking in rotation the ring nut.

In a position diametrically opposed to the peg 93, on said shell 91 there is provided a rib 94 protruding below, provided with an external protuberance 95, which goes to insert in the slot with recess 54' provided in the knob.

In the assembled condition, the rib 94, abutting against the end ribs 28 provided on the lid 2, determines the end stops of the angle of rotation of the knob 50, and the protuberance 95 which is placed in the elongated recesses 29 prevents unintentional return rotation.

The same protuberance 95 of the rib 94 when placed within the semi-circular recess 30 provided in the lid determines the positioning of the valve in the suction condition for the creation of vacuum.

The internal ribs 28 provided on the lid 2 are intended to prevent incorrect positioning of the ring nut 90 during the phase of assembly of the valve.

Before briefly illustrating the functioning of the valve with reference to Figures 6a, 6b, 6c, the assembly of the same and its mounting on the lid 2 are described in brief.

Initially, the pin 60 is inserted in the hollow cylindrical body 11, then the grommet 70 is mounted in the annular groove 62 of the pin by its tip 63 protruding below from the body 11.

At this point, the toroidal sealing gasket 80 can be mounted on the lower cylindrical section of the body **11** or in the seat 20 formed in the lid, after which the knob 50 can be screwed tightly on the lid 2, bringing the valve into a closed condition.

Subsequently the fixing ring nut 90 is attached on the knob 50 by inserting the rib 94 in the slot 54', and simultaneously the peg 93 in the hole 55. Pushing the ring nut fully in, the opposing teeth 92 provided thereon engage with the corresponding opposing slots 54 in the knob 50, firmly locking the assembly.

At any stage of assembly, the covering cap 40 may be applied inside the lid.

As mentioned, after assembly, the valve 10 is in the closed condition shown in Fig. 6a, with the knob 50 fully screwed and the grommet sealing against the conical section 25 of the seat 20, occluding the opening 24 for the passage of air. In this condition, the pin 60 is locked axially and the rib 94 of the ring nut 90 abuts against the end rib 28 of the lid 2 placed above in Fig. 13, with the protuberance 95 in the corresponding recess 29.

By rotating the knob 50 about 90° anticlockwise until the protuberance 95 is engaged with the semi-circular recess 30, the valve is positioned in the vacuum position of Fig. 6b, in which air can be aspirated from the container to create the vacuum.

In this condition, the grommet 70 is still in contact with the conical section 25 of the seat 20 of the lid, preventing air from entering the container, but the pin 60 is free to oscillate to move upwards and downwards, on the basis of the difference in pressure between the interior and the exterior of the container.

Therefore, during the suction phase, the pin is raised permanently or intermittently, according to the type of pump used, distancing the rubber grommet 70 from the conical section 25 and allowing the passage of air out of the container.

The passage of air is permitted by the notches 65 provided on the bottom of the hollow cylindrical body 11, which prevent the adhesion of the rubber grommet 70 to the body 11 when the pin 60 is pulled upwards by the external vacuum.

The covering cap 40 prevents the passage of fine particles during the suction phase, while the passage of air is allowed thanks to the notches 32 and 42 provided, respectively, inside the lid and the cap.

A further anticlockwise rotation of the knob by little more than 90° brings the rib 94 to abut against the end rib 28 of the lid arranged below in Fig. 13, positioning the valve in the open position of Fig. 6c.

In this condition, the pin 60 is held raised from the body 11, with its head 61 resting on the flat shoulder 16 provided inside the body 11, keeping the rubber grommet 70 distanced from the conical section 25, allowing the passage of air into or out of the container according to the pressure difference between interior and exterior.

In particular, when the valve is opened to remove the vacuum, the low pressure existing inside the container draws air from the exterior, which can pass below the head 61 of the pin 60, through the notches 66 provided on the flat shoulder 16.

The gasket 80, which can move vertically during the functioning of the valve, has a height such as to ensure tightness in all the positions the valve may assume. The components of the valve 10 are preferably made in plastic material, with the exception of the pin 60 which is conveniently in metal material.

From what is disclosed the advantages of the lid for the closure of vacuum food containers according to the invention appear clear, the valve whereof is made up of few components, simple in construction and easy to assemble.

Naturally the invention is not limited to the particular embodiment described above and illustrated in the accompanying drawings, but numerous detailed changes may be made thereto within the reach of the person skilled in the art, without thereby departing from the scope of the invention as defined in the appended claims.

## Claims

1. A valve lid (2) for vacuum containers (1), provided with a seat (20) having an opening (24) towards the inside of the container (1) in which a valve body (11), axially slidingly supporting a pin (60) capable of occluding or releasing said opening (24), is housed, said valve body (11) being operable by a control knob (50) to be moved from a raised opening position in which said pin (60) frees said opening (24) allowing the free passage of air, to an intermediate suction position for the creation of vacuum in the container, and to a lowered closed position in which said pin (60) occludes the opening (24) preventing the passage of air, **characterized in that** said valve body is integral with the knob (50), from which it can be operated in rotation, and a threaded coupling is provided between said valve body (11) and the seat (20) obtained in the lid (2).

2. Lid according to claim 1, **characterized in that** said valve body (11) is integrally formed with the knob (50).

3. Lid according to claim 1 or 2, **characterized in that** said valve body (11) comprises a substantially hollow cylindrical element having on part of its height an external thread (18), suitable to couple with a corresponding internal thread (23) of said seat (20).

4. Lid according to claim 3, **characterized in that** said seat (20) is defined by two hollow, coaxial cylindrical sections: an upper one (21), protruding superiorly from the lid (2), in which said internal thread (23) is obtained, and a lower one (22), of smaller diameter, protruding internally from the lid, on the bottom of which said opening (24) is provided, and presenting a conical section (25) with which a conical rubber grommet (70) provided on said pin (60) of the valve body (11) is engaged to occlude said opening (24).

5. Lid according to claims 3 and 4, **characterized in that** said hollow cylindrical body (11) is housed in the upper cylindrical section (21) of the seat (20) obtained in the lid (2) and has a lower cylindrical section (12) of smaller diameter, around which a sealing gasket (80) is arranged, and has an axial cavity (14) for housing said pin (60), which widens at the top into a coaxial cavity (15) of an upper cylindrical section (13) of greater diameter, bearing said external thread (18), said cavities (14, 15) being connected to each other by a flat shoulder (16), on which an enlarged head (61) of said pin (60) rests.

6. Lid according to any one of the preceding claims, **characterized in that** a cap (40) is arranged internally to the lid (2) covering the opening (24), capable of preventing the passage of fine particles that may be contained in the container (1) during the aspiration of air for the creation of a vacuum, internally to the cap (40) being provided notches (42), and corresponding notches (32, 33) being provided internally to the lid (2) to allow the passage of air.

7. Lid according to claim 5 or 6, **characterized in that** notches (65) are provided on the bottom of the lower cylindrical section (12) of the body (11), and corresponding notches (66) are provided on said flat shoulder (16), which forms the bottom of the upper cavity (15) of the body (11) to allow the exit and/or entry of air into the container.

8. Lid according to any one of the preceding claims, **characterized in that** a ring nut (90) is mounted on the knob (50) to prevent it from slipping off and to allow it a limited angle of rotation, cooperating with means provided on the knob and on the lid.

9. Lid according to claim 8, **characterized in that** said ring nut (90) bears inferiorly a pair of opposing teeth (92) apt to engage in corresponding opposing slots (54) provided in the knob (50) for its axial locking, and a pin (93) apt to engage in a hole (55) provided in the knob (50) for its rotational locking.

10. Lid according to claim 8 or 9, **characterized in that** said ring nut (90) also bears a rib protruding downwards (94) provided with an external protuberance (95), which fits into the slot (54) with an external recess (54') provided in the knob (50) and cooperates with ribs (28) and recesses (29, 30) provided on the lid (2) to determine said opening, suction and closing positions of the valve.

## Patentansprüche

1. Ventildeckel (2) für Vakuumbehälter (1), versehen mit einem Sitz (20), aufweisend eine Öffnung (24) in Richtung der Innenseite des Behälters (1), in dem ein Ventilkörper (11) untergebracht ist, der axial gleitend einen Stift (60) stützt, der in der Lage ist, die Öffnung (24) zu versperren oder freizugeben, wobei der Ventilkörper (11) durch einen Steuerknopf (50) betätigbar ist, um von einer angehobenen Öffnungsstellung, in der der Stift (60) die Öffnung (24) freigibt und das freie Durchströmen von Luft ermöglicht, in eine Zwischenansaugstellung zur Erzeugung eines Vakuums im Behälter und in eine abgesenkte geschlossene Stellung, in der der Stift (60) die Öffnung (24) versperrt und das Durchströmen von Luft verhindert, bewegt zu werden, **dadurch gekennzeichnet, dass** der Ventilkörper in einem Stück mit dem Knopf (50) ausgeführt ist, von dem aus er in Drehung versetzt werden kann, und eine Gewindekupplung zwischen dem Ventilkörper (11) und dem in dem Deckel (2) ausgebildeten Sitz (20) bereitgestellt ist.

2. Deckel nach Anspruch 1, **dadurch gekennzeichnet, dass** der Ventilkörper (11) einstückig mit dem Knopf (50) ausgebildet ist.

3. Deckel nach Anspruch 1 oder 2, **dadurch gekennzeichnet, dass** der Ventilkörper (11) ein im Wesentlichen hohles zylindrisches Element umfasst, das auf einem Teil seiner Höhe ein Außengewinde (18) aufweist, das geeignet ist, um mit einem entsprechenden Innengewinde (23) des Sitzes (20) gekuppelt zu werden.

4. Deckel nach Anspruch 3, **dadurch gekennzeichnet, dass** der Sitz (20) durch zwei hohle, koaxiale zylindrische Abschnitte definiert ist: einen oberen (21), der oberseitig von dem Deckel (2) hervorsteht, in dem das Innengewinde (23) ausgebildet ist, und einen unteren (22), der einen kleineren Durchmesser aufweist, der innenseitig von dem Deckel hervorsteht, auf dessen Unterseite, die Öffnung (24) bereitgestellt ist, und aufweisend einen konischen Abschnitt (25), mit dem eine konische Gummitülle (70), die auf dem Stift (60) des Ventilkörpers (11) bereitgestellt ist, im Eingriff ist, um die Öffnung (24) zu versperren.

5. Deckel nach den Ansprüchen 3 und 4, **dadurch gekennzeichnet, dass** der hohle zylindrische Körper (11) in dem oberen zylindrischen Abschnitt (21) des in dem Deckel (2) ausgebildeten Sitzes (20) untergebracht ist und einen unteren zylindrischen Abschnitt (12) mit kleinerem Durchmesser aufweist, um den herum eine Dichtung (80) angeordnet ist, und einen axialen Hohlraum (14) zur Aufnahme des Stifts (60) aufweist, der sich an der Oberseite in einen koaxialen Hohlraum (15) eines oberen zylindrischen Abschnitts (13) mit größerem Durchmesser erweitert, der das Außengewinde (18) trägt, wobei die Hohlräume (14, 15) durch eine flache Schulter (16) miteinander verbunden sind, auf der ein vergrößerter Kopf (61) des Stifts (60) ruht.

6. Deckel nach einem der vorhergehenden Ansprüche, **dadurch gekennzeichnet, dass** im Inneren des Deckels (2) eine die Öffnung (24) abdeckende Kappe (40) angeordnet ist, die in der Lage ist, das Durchströmen von feinen Partikeln zu verhindern, die während des Ansaugens von Luft zur Erzeugung eines Vakuums in dem Behälter (1) enthalten sein können, wobei im Inneren der Kappe (40) Kerben (42) vorgesehen sind und entsprechende Kerben (32, 33) im Inneren des Deckels (2) vorgesehen sind, um das Durchströmen von Luft zu ermöglichen.

7. Deckel nach Anspruch 5 oder 6, **dadurch gekennzeichnet, dass** Kerben (65) auf der Unterseite des unteren zylindrischen Abschnitts (12) des Körpers (11) vorgesehen sind und entsprechende Kerben (66) auf der flachen Schulter (16) vorgesehen sind, die die Unterseite des oberen Hohlraums (15) des Körpers (11) bildet, um den Austritt und/oder Eintritt von Luft aus dem bzw. in den Behälter zu ermöglichen.

8. Deckel nach einem der vorhergehenden Ansprüche, **dadurch gekennzeichnet, dass** auf dem Knopf (50) eine Ringmutter (90) montiert ist, um zu verhindern, dass dieser abrutscht, und um diesem einen begrenzten Drehwinkel zu ermöglichen, indem sie mit Mitteln zusammenwirkt, die auf dem Knopf und dem Deckel bereitgestellt sind.

9. Deckel nach Anspruch 8, **dadurch gekennzeichnet, dass** die Ringmutter (90) unterseitig ein Paar gegenüberliegender Zähne (92) trägt, die geeignet sind, um in entsprechende gegenüberliegende Schlitze (54) einzugreifen, die in dem Knopf (50) für dessen axiale Verriegelung vorgesehen sind, und einen Stift (93), der geeignet ist, um in ein Loch (55) einzugreifen, das in dem Knopf (50) für dessen Drehverriegelung vorgesehen ist.

10. Deckel nach Anspruch 8 oder 9, **dadurch gekennzeichnet, dass** die Ringmutter (90) auch eine nach unten hervorstehende Rippe (94) trägt, die mit einer externen Ausstülpung (95) versehen ist, die in den Schlitz (54) mit einer externen Aussparung (54') passt, die in dem Knopf (50) vorgesehen ist, und mit Rippen (28) und Aussparungen (29, 30) zusammenwirkt, die auf dem Deckel (2) vorgesehen sind, um die Öffnungs-, Ansaug- und Schließstellungen des Ventils zu bestimmen.

## Revendications

1. Couvercle (2) à soupape pour récipients (1) sous vide, muni d'un siège (20) ayant une ouverture (24) vers l'intérieur du récipient (1) dans lequel un corps (11) de soupape, portant axialement de manière coulissante une goupille (60) capable d'obstruer ou de libérer ladite ouverture (24), est logé, ledit corps (11) de soupape étant apte à être actionné par une molette (50) de commande pour être passé d'une position d'ouverture relevée dans laquelle ladite goupille (60) libère ladite ouverture (24) autorisant le libre passage d'air, à une position d'aspiration intermédiaire pour la création d'un vide dans le récipient, et à une position fermée abaissée dans laquelle ladite goupille (60) obstrue l'ouverture (24) empêchant le passage d'air, **caractérisé en ce que** ledit corps de soupape est solidaire de la molette (50), à partir de laquelle il peut être actionné en rotation, et un raccord fileté est ménagé entre ledit corps (11) de soupape et le siège (20) obtenu dans le couvercle (2).

2. Couvercle selon la revendication 1, **caractérisé en ce que** ledit corps (11) de soupape est formé d'un seul tenant avec la molette (50).

3. Couvercle selon la revendication 1 ou 2, **caractérisé en ce que** ledit corps (11) de soupape comprend un élément cylindrique sensiblement creux ayant, sur une partie de sa hauteur, un filetage externe (18), approprié pour se coupler avec un filetage interne (23) correspondant dudit siège (20).

4. Couvercle selon la revendication 3, **caractérisé en ce que** ledit siège (20) est défini par deux sections cylindriques creuses coaxiales : une section supérieure (21), faisant saillie de manière supérieure à partir du couvercle (2), dans laquelle ledit filetage interne (23) est obtenu, et une section inférieure (22), de plus petit diamètre, faisant saillie de manière interne à partir du couvercle, sur le bas de laquelle ladite ouverture (24) est ménagée, et présentant une section conique (25) avec laquelle un œillet conique en caoutchouc (70) ménagé sur ladite goupille (60) du corps (11) de soupape est mis en prise pour obstruer ladite ouverture (24).

5. Couvercle selon les revendications 3 et 4, **caractérisé en ce que** ledit corps (11) cylindrique creux est logé dans la section cylindrique supérieure (21) du siège (20) obtenu dans le couvercle (2) et possède une section cylindrique inférieure (12) de plus petit diamètre, autour de laquelle un joint d'étanchéité (80) est agencé, et possède une cavité axiale (14) pour le logement de ladite goupille (60), qui s'élargit sur le haut en une cavité (15) coaxiale d'une section cylindrique supérieure (13) de plus grand diamètre, portant ledit filetage externe (18), lesdites cavités (14, 15) étant reliées l'une à l'autre par un épaulement plat (16), sur lequel une tête élargie (61) de ladite goupille (60) repose.

6. Couvercle selon l'une quelconque des revendications précédentes, **caractérisé en ce qu'**un capuchon (40) est agencé de manière interne au couvercle (2) en recouvrant l'ouverture (24), capable d'empêcher le passage de particules fines qui peuvent être contenues dans le récipient (1) pendant l'aspiration d'air pour la création d'un vide, des encoches (42) étant ménagées de manière interne au capuchon (40), et des encoches (32, 33) correspondantes étant ménagées de manière interne au couvercle (2) pour autoriser le passage d'air.

7. Couvercle selon la revendication 5 ou 6, **caractérisé en ce que** des encoches (65) sont ménagées sur le bas de la section cylindrique inférieure (12) du corps (11), et des encoches (66) correspondantes sont ménagées sur ledit épaulement plat (16), qui forme le bas de la cavité (15) supérieure du corps (11) pour autoriser la sortie et/ou l'entrée de l'air dans le récipient.

8. Couvercle selon l'une quelconque des revendications précédentes, **caractérisé en ce qu'**un écrou à anneau (90) est monté sur la molette (50) pour l'empêcher de s'enlever et pour lui autoriser un angle de rotation limité, coopérant avec des moyens ménagés sur la molette et sur le couvercle.

9. Couvercle selon la revendication 8, **caractérisé en ce que** ledit écrou à anneau (90) porte inférieurement une paire de dents opposées (92) aptes à se mettre en prise dans des fentes (54) opposées correspondantes ménagées dans la molette (50) pour son verrouillage axial, et une goupille (93) apte à se mettre en prise dans un trou (55) ménagé dans la molette (50) pour son verrouillage en rotation.

10. Couvercle selon la revendication 8 ou 9, **caractérisé en ce que** ledit écrou à anneau (90) porte également une nervure faisant saillie vers le bas (94) munie d'une protubérance externe (95), qui s'emboîte dans la fente (54) dotée d'un évidement externe (54') ménagé dans la molette (50) et coopère avec des nervures (28) et des évidements (29, 30) ménagés sur le couvercle (2) pour déterminer lesdites positions d'ouverture, d'aspiration et de fermeture de la soupape.
